(19) Europäisches Patentamt
European Patent Office
Office européen des brevets

(11) **EP 1 642 640 B1**

(12) **EUROPÄISCHE PATENTSCHRIFT**

(45) Veröffentlichungstag und Bekanntmachung des Hinweises auf die Patenterteilung:
**21.05.2008 Patentblatt 2008/21**

(51) Int Cl.:
*B01J 19/30* (2006.01)      *C01B 3/00* (2006.01)
*B01J 20/00* (2006.01)

(21) Anmeldenummer: **05020633.3**

(22) Anmeldetag: **22.09.2005**

(54) **Nanostrukturen für das Adsorbieren von Wasserstoff**

Nanostructures for adsorbing hydrogen

Nanostructures pour l'adsorption d'hydrogène

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.09.2004 DE 102004046108**
**23.09.2004 DE 102004046109**

(43) Veröffentlichungstag der Anmeldung:
**05.04.2006 Patentblatt 2006/14**

(73) Patentinhaber: **Deutsches Zentrum für Luft- und Raumfahrt e.V.**
**51147 Köln (DE)**

(72) Erfinder:
• **Melcher, Jörg, Dr.-Ing.**
**38165 Lehre (Wendhausen) (DE)**
• **Junge, Monika, Dr. rer. nat.**
**38102 Braunschweig (DE)**
• **Lura, Franz, Dr. rer. nat.**
**12557 Berlin (DE)**
• **Niederstadt, Timo**
**38104 Braunschweig (DE)**

(74) Vertreter: **Rehberg Hüppe + Partner**
**Nikolausberger Weg 62**
**37073 Göttingen (DE)**

(56) Entgegenhaltungen:
• **D. AJAMI ET AL.: "Synthesis of a Möbious aromatic hydrocarbon" NATURE, Bd. 426, Dezember 2003 (2003-12), Seiten 819-821, XP002402228**
• **SAN MING YANG ET AL.: "Formation of Hollow Helicoids in Mesoporous Silica: Supramolecular Origami" ADV. MATER., Nr. 17, November 1999 (1999-11), Seiten 1427-1430, XP002402227**
• **PATENT ABSTRACTS OF JAPAN Bd. 013, Nr. 003 (C-557), 6. Januar 1989 (1989-01-06) & JP 63 214394 A (MEIDENSHA ELECTRIC MFG CO LTD), 7. September 1988 (1988-09-07)**
• **HIROSHI JINNAI ET AL: "Topological similarity of sponge-like bicontinuous morphologies differing in length scale" ADV. MATER., Bd. 14, Nr. 22, 18. November 2002 (2002-11-18), Seiten 1615-1618, XP002417036**
• **CHEN Y ET AL: "Metal hydride beds and hydrogen supply tanks as minitype PEMFC hydrogen sources" INTERNATIONAL JOURNAL OF HYDROGEN ENERGY, ELSEVIER SCIENCE PUBLISHERS B.V., BARKING, GB, Bd. 28, Nr. 3, März 2003 (2003-03), Seiten 329-333, XP004855997 ISSN: 0360-3199**

## EP 1 642 640 B1

**Beschreibung**

Die Erfindung betrifft eine Nanostruktur für das Adsorbieren chemischer Substanzen nach dem Oberbegriff des Patentanspruchs 1.

Ein Beispiel für die Verwendung solch einer räumlichen Struktur ist ein Wasserstoffspeicher, in dem Wasserstoff reversibel an die räumliche Struktur angelagert wird. Daneben gibt es viele andere Anwendungsmöglichkeiten solcher räumlicher Strukturen für das Adsorbieren chemischer Substanzen, wobei insbesondere die Fälle hier von Interesse sind, in denen es um ein reversibles Adsorbieren der chemischen Substanzen geht, also um die vorübergehende und wieder lösbare Anbindung der chemischen Substanzen an die jeweilige räumliche Struktur. Es gibt aber auch sinnvolle Anwendungen, bei denen die Anbindung im Wesentlichen dauerhaft sein sollte, beispielsweise wenn bestimmte Substanzen aus einem Gasstrom herauszufiltern sind.

## STAND DER TECHNIK

Die Zukunft der Brennstoffzellentechnologie, beispielsweise im Kraftfahrzeugbereich, hängt von Fortschritten bei der Speicherung von Wasserstoff in Wasserstöffspeichern mit möglichst geringem Volumen, möglichst geringem Gewicht aber dennoch möglichst hoher Betriebssicherheit ab.

Die einfache Speicherung von Wasserstoff in Drucktanks birgt ein hohes Gefahrenpotenzial, da hier für eine nennenswerte Füllung Drücke im Bereich von 500 bis 1.000 bar notwendig sind. Außerdem sind entsprechende Drucktanks sperrig und schwer und daher schwierig, in Kraftfahrzeugen unterzubringen.

Eine bekannte Alternative zu Drucktanks bei der Wasserstoffspeicherung basiert auf porösen Festkörpern aus Metallen. Diese Wasserstoffspeicher basieren auf dem Effekt, dass bestimmte Metalle wie z.B. Palladium oder Magnesium, und intermetallische Verbindungen, wie z.B. $ZrMn_2$, Wasserstoff unter moderatem Druck aufnehmen und ihn innerhalb ihrer Gitterstruktur als Metallhydrid binden. Bei Temperaturerhöhung erfolgt eine Wiederfreisetzung des Wasserstoffs. Diese chemischen Reaktionen sind nicht nur reversibel sondern gut kontrollierbar und erlauben eine weitgehend verlustfreie Speicherung von Wasserstoff über einen längeren Zeitraum, da das Gas chemisch gebunden ist und daher nicht entweichen kann. Auch aus Sicherheitsgesichtspunkten sind Metallhydridspeicher nahezu unbedenklich. Als nachteilig ist jedoch die geringe massespezifische Speicherdichte von bekannten Metallhydridspeichern anzusehen, die nur zwischen 1,7 und 5 Gewichtsprozent Wasserstoff bezogen auf die Masse des Speichermediums beträgt. Metallhydridspeicher sind also sehr schwer. Ein zusätzlicher Nachteil besteht darin, dass je nach Metallhydrid zur Freisetzung des Wasserstoffs sehr hohe Temperaturen erforderlich sind. Die bislang maximal erreichte Speicherdichte von 5 Gewichtsprozent wurde mit Hilfe komplexer Metallhydride, wie z.B. Natrium-Aluminiumhydrid (Natriumallanat) erreicht, bei denen trotz Reduzierung kinetischer Barrieren mit geeigneten Katalysatoren sehr lange Beladungszeiten erforderlich sind und auch nur relativ geringe Wiederabgaberaten des Wasserstoffs realisierbar sind.

Es wird daher verstärkt nach alternativen Wasserstoffspeichern gesucht. Ein hohes diesbezügliches Potenzial weisen Nanostrukturen, d.h. nanoskalige räumliche Strukturen auf, die aufgrund ihrer vergrößerten Oberfläche prinzipielle Vorteile bei der Absorption chemischer Substanzen bieten. Auch die Erreichbarkeit der Oberfläche von Nanostrukturen ist verglichen mit der Erreichbarkeit von Absorptionsplätzen im Inneren eines Festkörpers sehr günstig.

In den letzten Jahren haben Berichte über hohe Speicherkapazitäten von Nanostrukturen in Form von Kohlenstoffröhrchen mit einem Durchmesser von bis zu 20 Nanometern und einer Länge von 100 nm bis zu einigen Millimetern, hohe Aufmerksamkeit erregt. Die hierzu anfänglich publizierten hohen Speicherdichten konnten jedoch experimentell nicht nachgewiesen werden. Seriöse Angaben der Speicherdichten liegen zwischen 2 und 4,5 Gewichts-%, wobei jedoch noch unklar ist, welche Größen und weitere Parameter der Kohlenstoffröhrchen die besten Speichereigenschaften besitzen. So können die Wandungen der Röhrchen unterschiedliche Aufbauten, d.h. Anordnungen der einzelnen Atome, aufweisen, die beispielsweise als "armchair", "zigzag" und "chiral" bezeichnet werden. Die notwendigen Beladungszeiten bei Kohlenstoffröhrchen, um die oben angegebenen Speicherdichten zu erzielen, liegen immer noch im Bereich einiger Stunden und sind daher als tendenziell viel zu lang für einen Einsatz beispielsweise im Kraftfahrzeugbereich anzusehen, in dem ein schnelleres Wiederaufladen eines Wasserstoffspeichers möglich sein sollte.

Es sind auch gekrümmte und helikale Kolhenstoffröhrchen als Nanostrukturen in Erwägung gezogen worden, um Wasserstoff zu speichern. Hierdurch werden sich aber die grundsätzlichen Eigenschaften solcher Kohlenstoffröhrchen zur Wasserstoffspeicherung nicht verbessern lassen.

Neben Kohlenstoffröhrchen sind auch Nanostrukturen in Form von Hohlkugeln und ineinander angeordneten Kugelschalen (Nanozwiebeln) für die Wasserstoffspeicherung in Betracht gezogen worden. Bei diesem verschlechtert sich jedoch in zunehmendem Maße der Schachtelung die Erreichbarkeit der dann innen liegenden Oberflächen.

Die Erreichbarkeit der Oberflächen für den anzulagernden Wasserstoff ist bei einer bekannten räumlichen Struktur mit den Merkmalen des Oberbegriffs des Anspruchs 1 am Größten, die als Nanocone bezeichnet wird und bei der eine innere und eine äußere gekrümmte Oberfläche von einer einzigen kegelmantelförmige atomaren Einzellage aus graphitischem Kohlenstoff ausgebildet sind. Allerdings ist die Frage, ob sich z.B. Wasserstoff auch an der inneren Spitze eines Nanocones anlagern kann, oder ob hier nicht tatsächlich sehr ungünstige Potenzialverhältnisse insbesondere für die reversible Anlagerung chemischer Substanzen vorliegen.

Es sind auch planare graphitische Kohlenstöffschichten zur Speicherung von Wasserstoff erprobt worden. Auch bei relativ hohen Drücken während der Beladung wurden damit jedoch nur relativ geringe Speicherdichten erzielt.

In Terrones, H. et al.: "Curved nanostructured Materials" in New J. Phys. 5 (2003) 126, PII: S1367-2630(03) 65766-6 sind verschiedene gekrümmte Nanostrukturen, beispielsweise auf der Basis hexagonalen Kohlenstoffs, grundsätzlich beschrieben und Wege zu ihrer Herstellung aufgezeigt.

Nanoskalige Möbiusbänder mit dem Merkmalen des Oberbegriffs des Patentanspruchs 1 wurden von Ajami, D. et al: "Synthesis of a Möbius aromatic Hydrocarbone" in Nature, Dec. 2003, Vol. 426 No. 6968, p. 819-821, vorgestellt.

## AUFGABE DER ERFINDUNG

Es ist die Aufgabe der vorliegenden Erfindung, räumliche Strukturen aufzuzeigen, die grundsätzliche Vorteile für die Adsorption von chemischen Substanzen an ihre gekrümmte Oberfläche aufweisen, indem alle ihre Oberflächen für die zu adsorbierende chemische Substanz leicht zugänglich sind.

## LÖSUNG

Erfindungsgemäß wird diese Aufgabe durch eine Nanostruktur mit den Merkmalen des Patentanspruchs 1 gelöst. Bevorzugte Ausführungsformen der Nanostruktur sind in den Unteransprüchen 2 bis 5 beschrieben.

## BESCHREIBUNG DER ERFINDUNG

Die hier für das Adsorbieren chemischer Substanzen vorgeschlagene neue Nanostruktur zeichnet sich dadurch aus, dass bei maximalen Abmessungen der Nanostruktur von 2000 nm jede Oberfläche der Nanostruktur eine äußere Oberfläche mit einer Gaußschen Krümmung kleiner als null ist. Die Forderung nach ausschließlich äußeren Oberflächen schließt innere Oberflächen, die nur schwer von der zu adsorbierenden chemischen Substanz erreicht werden, wie beispielsweise die innere Oberfläche einer Hohlkugel, grundsätzlich aus. Die Gaußsche Krümmung kleiner als Null ist eine zusätzliche Forderung, die ein zusätzliches Kriterium für die gute Zugänglichkeit aller Oberflächen der Nanostruktur bereitstellt.

Die neue Nanostruktur weist die Form eine Helikoids auf. Bei einem Helikoid ist jede Oberfläche der Nanostruktur eine Minimalfläche und weist eine mittlere Krümmung von null auf, so dass es sich um Ennepersche Minimalflächen handelt. Bei einem Helikoid gibt es grundsätzlich keine Stapelbarkeit, aber eine gewisse Gefahr des radialen Ineinandergreifens einzelner Helikoide.

Die neue Nanostruktur weist typische Abmessungen im Bereich einiger zig Nanometer bis einiger hundert Nanometer auf, so dass ihre maximalen Abmessungen in der Regel nicht mehr als 1000 nm betragen. Die übliche Zahl der an der neuen Nanostruktur beteiligten Atome liegt zwischen etwa 50 und einigen hundert.

Bevorzugt sind Nanostrukturen, bei denen jede Oberfläche einen minimalen Krümmungsradius mehr als 1 Nanometer, besonders bevorzugt von mehr als 10 nm aufweist. Hierdurch wird sichergestellt, dass es keine Bereiche der Oberflächen der Nanostrukturen gibt, in denen sich Potenzialbarrieren durch die geometrische Form der Oberfläche aufbauen, die das Adsorbieren der chemischen Substanzen in diesem Bereich faktisch ausschließen oder zumindest die Reversibilität der Adsorption verhindern.

Die neuen Nanostrukturen sind vorzugsweise aus einer atomaren Einzellage ausgebildet. Atomare Mehrfachlagen bedeuten tendenziell nur eine Erhöhung des Gewichts und des Eigenvolumens der Nanostruktur, ohne ihre Adsorptionseigenschaften in Bezug auf die chemische Substanz zu verbessern.

Die einzelnen Atome der atomaren Einzellager können Kohlenstoffatome sein. Die neuen Nanostrukturen können aber auch aus andern Substanzen bestehen, wie Zeolithen, d.h. Silikatmineralien, Bornitriden oder aus metallorganischen Komplexen. Die Auswahl des Materials ist im Einzelfall in Abhängigkeit von der zu adsorbierenden chemischen Substanz zu treffen.

Auch die Herstellung der neuen Nanostrukturen wird durch die Tatsache erleichtert, dass jede ihrer Oberflächen eine Minimalfläche ist. Dies ist gleichbedeutend damit, dass die Nanostruktur eine geometrische Gestalt minimaler Verformungsenergie aufweist, d.h. energetisch stabil ist. Die neuen Nanostrukturen können daher beispielsweise dadurch hergestellt werden, dass eine ebene Ausgangsstruktur, wie beispielsweise eine hexagonale Anordnung von graphitischem Kohlenstoff deformiert wird, indem an definierten Stellen durch Einlagerung von Fremdatomen Spannungen eingebracht werden. Bei dem Bestreben der Struktur, diese Spannungen abzubauen, stellen sich die gewünschten gekrümmten Nanostrukturen dann quasi automatisch ein.

Die neuen Nanostrukturen können in Form eines Schüttguts bestehend aus einer Vielzahl von einzelnen Nanostrukturen eingesetzt werden. So kann beispielsweise ein Wasserstoffspeicher ausgebildet werden. Die Nanostrukturen können aber auch als Träger für Medikamente, Katalysatoren und dgl. verwendet werden oder auch zum Einfangen und Festhalten, d.h. Unschädlichmachen, von chemischen Substanzen beispielsweise aus einem Gasstrom. Dabei geht es im Falle der vorliegenden Anmeldung primär um die grundsätzliche Gestalt der Nanostrukturen und um die gute Zugänglichkeit aller Oberflächen dieser Nanostrukturen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher. Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

## KURZBESCHREIBUNG DER FIGUREN

Im Folgenden wird die Erfindung anhand in den Figuren dargestellter bevorzugter Ausführungsbeispiele weiter erläutert und, beschrieben.

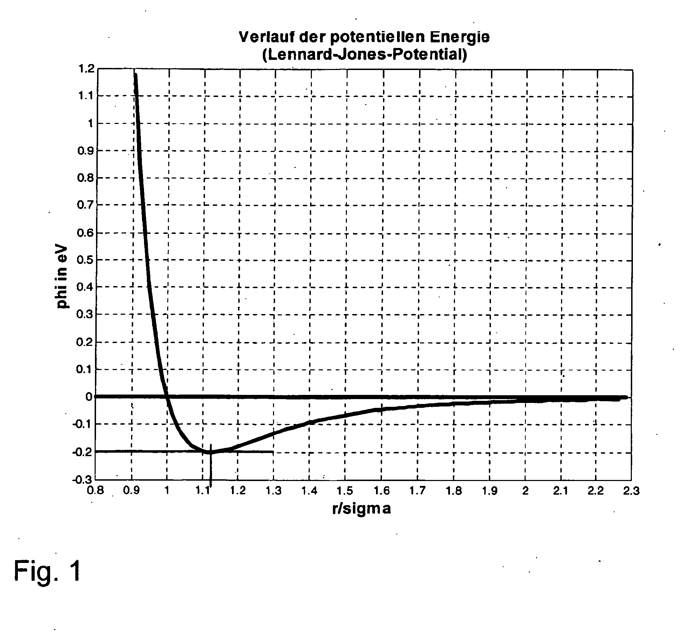

**Fig. 1**          zeigt den Verlauf der potentiellen Energie nach Lennard-Jones.

**Fig. 2**          zeigt eine Nanostruktur in Form eines Helikoids.

**Fig. 3**          zeigt die Umwandlung eines Katenoiden zu einem Helikoiden; und die.

**Figuren 4 bis 8**     zeigen Nanostrukturen, bei denen es sich um Abwandlungen des Helikoids gemäß Fig. 2 handelt.

## FIGURENBESCHREIBUNG

### Einführung

Zur Beschreibung der physikalischen Adsorption von Gasen an Festkörperoberflächen hat sich das empirische Wechselwirkungspotenzial nach Lennard-Jones gemäß

$$\phi(r) = 4 \cdot \varepsilon \left[ \left( \frac{\sigma}{r} \right)^{12} - \left( \frac{\sigma}{r} \right)^{6} \right] = 4 \cdot \varepsilon \cdot \sigma^6 \left( \frac{\sigma^6 - r^6}{r^{12}} \right)$$

mit den empirischen Größen $\varepsilon$ (Tiefe der Potenzialmulde) und $\sigma$ (Kollisionsabstand) bewährt. Der Vorteil dieser vereinfachenden Darstellung ist die Möglichkeit, das Wechselwirkungspotenzial für eine Mischung von Teilchen zu verallgemeinern. Während der erste Term in der linken Klammer die Abstoßung zwischen den abgeschlossenen Elektronenhüllen der Teilchen wiedergibt, beschreibt der zweite Ausdruck die Anziehung auf Grund der zwischenmolekularen Kräfte. Das Minimum der potenziellen Energie (Potenzialmulde) liegt bei diesem Modell stets bei

$$r = \sqrt[6]{2} \cdot \sigma = 1.12246 \cdot \sigma .$$

Dieser Gleichgewichtszustand befindet sich also bei einem Abstand, der lediglich etwas größer als der Kollisionsabstand ist.

Gute Lösungsansätze des Wasserstoff-Speicherproblems sollten daher die grundsätzliche und schnelle Erreichbarkeit der Potenzialmulde erlauben. Da die anziehenden Kräfte den negativen Gradienten des Potenzialfeldes entsprechen, der allerdings schon bei Werten r/σ > 2 vernachlässigbar klein wird, mussten Nanostrukturen gefunden werden, aus denen keine unnötigen Potenzialbarrieren für den Wasserstoff resultieren.

Die nachfolgend beschriebenen Nanostrukturen berücksichtigen diese Vorgabe, wobei das Ziel verfolgt wurde, eine größtmögliche Anzahl an "Andockstellen" für den Wasserstoff bereitzustellen. Dies kann grundsätzlich durch zwei Maßnahmen erreicht werden:

1. Die Kohlenstoffatome werden derart angeordnet, dass ihre Modifikation eine maximale Oberfläche aufweist und gleichzeitig die Kohlenstoffmenge minimiert. Diese Maßnahme führt zwangsläufig zu einer Gewichtsersparnis und zu einer sehr effizienten Speicherfähigkeit.

2. Die Kohlenstoffatome werden derart angeordnet, dass sich die Oberflächen der Molekülstrukturen nicht gegenseitig abdecken (wie z:B. bei Multi-Wall CNT) und der Wasserstoff durch die entstehende Potenzialbarriere nur unter Aufwendung zusätzlicher Energien und Kräfte (z.B. durch höhere Drücke) die inneren Flächen erreichen kann. Diese Maßnahme sollte zu einer Maximierung an "verfügbaren" Oberflächen und zu kurzen Beladungszeiten führen.

**Nanostruktur in Form eines Helikoids**

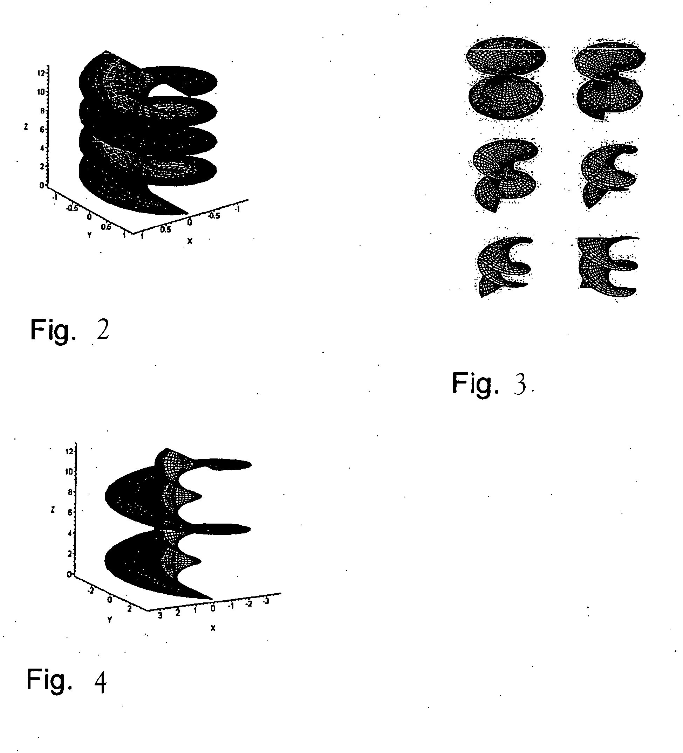

Eine Nanostruktur für das Adsorbieren chemischer Substanzen, die die obigen Vorgaben erfüllen, sind Helikoide im Nanomaßstab, die hier auch als Nanohelikoide bezeichnet werden und für die ein Beispiel in Fig. 2. wiedergegeben ist.

Nanohelikoide sind Minimalflächen im differenzialgeometrischen Sinn, deren Parameterform

$$x(u, v) = \sin(n \cdot u) \cdot \sinh(v)$$

$$y(u, v) = \cos(n \cdot u) \cdot \sinh(v)$$

$$z(u) = m \cdot u$$

lautet. Bei dem in Fig. 10 dargestellten Nanohelikoiden haben die Parameter $u$ und $v$ beispielsweise die Werte

$$u \in [0, 4\pi], \; v \in [-1, 1] \; \text{mit} \; n = m = 1.$$

Der Parameter **v** liefert den Durchmesser der Windung und ihre Symmetrie bzw. Gleichmäßigkeit (s. u. zu den Figuren 4 bis 8). Mit dem Parameter u lässt sich die Anzahl der Windungen einstellen. Mit Hilfe von n und m lässt sich die Ganghöhe einstellen.

Wie Fig. 3 skizziert, geht eine helikoide Minimalfläche durch Konjunktion aus einem Katenoiden hervor, der auch von Seifenblasenexperimenten her gut bekannt ist, gemäß

$$x(u, v) = \cos(\alpha) \cdot \cos(u) \cdot \cosh(v) + \sin(\alpha) \cdot \sin(u) \cdot \sinh(v)$$

$$y(u, v) = -\cos(\alpha) \cdot \sin(u) \cdot \cosh(v) + \sin(\alpha) \cdot \cos(u) \cdot \sinh(v)$$

$$z(u, v) = \cos(\alpha) \cdot v + \sin(\alpha) \cdot u$$

(Katenoid: $\alpha = 0$, Helikoid: $\alpha = \pi/2$).

In zylindrischen Koordinaten gehorcht eine helikal verlaufende Linie auf der Wendelfläche der Gleichung:

$$z = c \cdot \delta$$

mit der Konstanten $c$. In kartesischen Koordinaten gehorcht die Linie der Gleichung

$$\frac{y}{x} = \tan\left(\frac{z}{c}\right).$$

Mit den Wertebereichen $u \in [0,\delta]$ und $v \in [0,r]$ generieren die Linien die Minimalfläche mit dem (einseitigen) Flächeninhalt

$$A = \int_0^\delta \int_0^r \sqrt{c^2 + v^2} \, dv \, du = \frac{1}{2}\delta\left[ r\sqrt{c^2 + r^2} + c^2 \ln\left(\frac{r + \sqrt{c^2 + r^2}}{c}\right)\right].$$

Diese Fläche besitzt die Hauptkrümmungen

$$\kappa_1 = \frac{c}{c^2 + u^2} \text{ und } \kappa_2 = -\frac{c}{c^2 + u^2},$$

die stets negative Gaußsche Krümmung

$$K = \kappa_1 \cdot \kappa_2 = -\frac{c^2}{\left(c^2 + u^2\right)^2}$$

und die mittlere Krümmung

$$H = \frac{1}{2}\left(\kappa_1 + \kappa_2\right) = 0.$$

Die vorgeschlagenen Nanohelikoide erfüllen daher als Minimalflächen die d'Alembert'sche Differenziatglei-chung

$$y = x \cdot f(y') + g(y')$$

mit den gegebenen Funktionen $f$ und $g$ bzw. die Lagrange'sche Diffentialgleichung

$$\left(1+f_v^2\right)\cdot f_{uu} + 2\cdot f_u f_v f_{uv} + \left(1+f_u^2\right)\cdot f_{vv} = 0\,.$$

Die Nanohelikoide können demnach auch als eine Fläche charakterisiert werden, die eine spezielle Lösung für vorgegebene Randbedingungen ist (Plateausches Problem).

Die Wendelfläche der erfindungsgemäßen Nanohelikoide besteht vorzugsweise aus einer (deformierten) hexagonalen Anordnung von graphitischem Kohlenstoff, kann aber auch auf anderen geeigneten Substanzen aufbauen, z.B. auf Zeolithen (Silikatmineralien), Bornitrid oder aus MOF's.

Durch den helikalen Aufbau existieren bei den Nanohelikoiden nur noch "äußere" Oberflächen, an denen sich die Wasserstoffmoleküle derart dicht gepackt anlagern können, dass die genutzte Oberfläche pro Volumen besonders groß ist. Im Vergleich zu in Schichten angeordnetem Graphit bietet daher ein System aus Nanohelikoiden eine wesentlich größere Anzahl von Plätzen zum "Andocken" anderer Atome oder Molekülfragmente an die Kohlenstoffatome und damit viele Möglichkeiten, chemische Bindungen zu knüpfen.

Es ist nachvollziehbar, dass die Ganghöhe, die Länge und die Radien der Helikoide die entscheidenden Parameter bei der Identifikation der optimalen Konfiguration, z.8. für die Wasserstoffspeicherung, sind. Dabei ist z.B. die Ganghöhe derart auszulegen, dass beim Ineinandergreifen der Flächen die Anlagerungsmöglichkeit des Wasserstoffs ausreichend groß bleibt.

Überdies sind bei elektrochemischer Aktivierung der erfindungsgemäßen helikoiden Kohlenstoffmodifikation hochbelastbare Stellantriebe ausbildbar.

Als mögliche Abwandlungen des Nanohelikoids gemäß Fig. 2 seien solche erwähnt, die sich durch Variation formrelevanter Parameter ergeben. Allerdings führt die Variation unter Umständen zu dem Verlust der Minimalflächeneigenschaft. Im Hinblick auf die Wassserstoffspeicherfähigkeit ist auch dann noch eine gute aber suboptimale Leistung zu erwarten.

Fig. 4 zeigt eine Nanostruktur, bei der die oben definierten Parameter *v* und *u* die Werte *v*= [-1,2] und *u* = [0,4*Pi] annehmen.

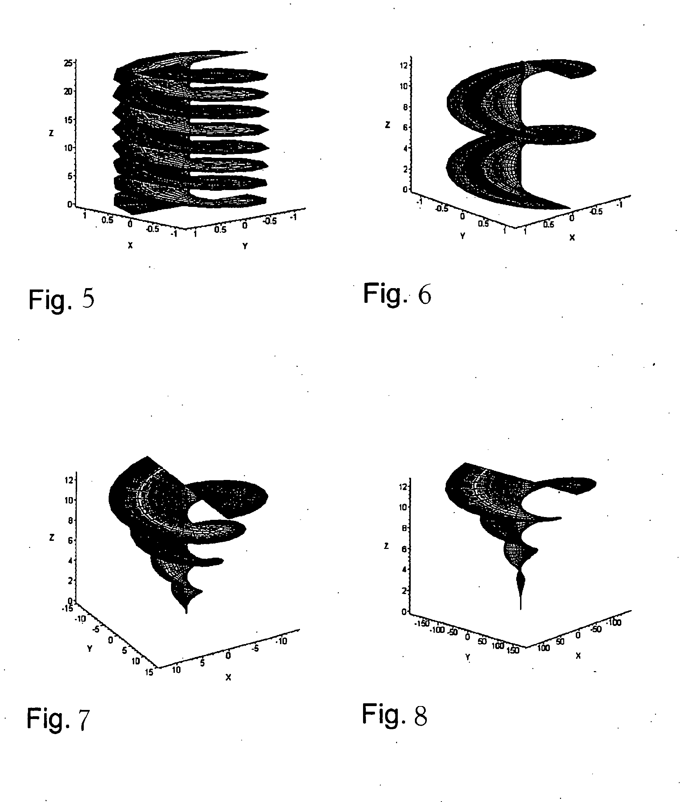

Fig. 5 zeigt eine Nanostruktur, bei der die oben definierten Parameter *v* und *u* die Werte *v* = [-1,1] und *u* = [0,8*Pi] annehmen.

Fig. 6 zeigt eine Nanostruktur, bei der die oben definierten Parameter *v* und *u* die Werte *v* = [-0,1] und *u* = [0,4*Pi] annehmen.

Fig. 7 zeigt eine Nanostruktur, bei der die Gleichungen

$$X = sinh(v)^*sin(u)^*u$$

$$Y = sinh(v)^*cos(u)^*u$$

$$Z = u$$

$$V = [-1,1] \; und \; u = [0,4^*Pi]$$

Erfüllt sind.

Fig. 8 zeigt eine Nanostruktur, bei der die Gleichungen

$$X = sinh(v)^*sin(u)^*u^2$$

$$Y = sinh(v)*cos(u)*u^2$$

$$Z = u$$

$$v = [-1,1] \; und \; u = [0,4*Pi]$$

erfüllt sind.

Aufgrund ihrer besonderen physikalischen und chemischen Eigenschaften, die durch ihre geometrischen Gestalt bedingt sind, ergeben sich neben der Speicherung von Wasserstoff und von anderen gasförmigen Substanzen auch die Möglichkeiten, mit der neuen Nanostruktur.

- Medikamentwirkstoffe zu transportieren oder

- Chemikalien zu binden bzw. chemische Reaktivitäten herabzusetzen oder

- Katalysatoren zu miniaturisieren.

Zumindest die für einen geometrischen Sattel, der durch zwei komplementäre Oberflächen in Form eines Sattels begrenzt wird, beschriebenen Eigenschaften sind auch bei räumlichen Strukturen gegeben, die eine oder mehrere Oberflächen in Form eines Nanosattels aufweisen.

**Patentansprüche**

1. Nanostruktur für das Adsorbieren chemischer Substanzen mit einer maximalen äußeren Abmessung von 2000 nm und mit mindestens einer gekrümmten äußeren Oberfläche, wobei jedeOberfläche der Nanostruktur eine äußere Oberfläche mit einer Gaußschen Krümmung kleiner als null ist,
**dadurch gekennzeichnet, dass** sie die Form eines Helikoids aufweist.

2. Nanostruktur nach Anspruch 1, **dadurch gekennzeichnet, dass** jede Oberfläche der Nanostruktur einen minimalen Krümmungsradius von mehr als 1 nm, vorzugsweise von mehr als 10 nm, aufweist.

3. Nanostruktur nach einem der Ansprüche 1 und 2 **dadurch gekennzeichnet, dass** die Nanostruktur aus einer atomaren Einzellage ausgebildet ist.

4. Nanostruktur nach einem der Ansprüche 1 bis 3 **dadurch gekennzeichnet, dass** jede Oberfläche der Nanostruktur eine Minimalfläche ist.

5. Nanostruktur nach Anspruch 4, **dadurch gekennzeichnet, dass** jede Oberfläche der Nanostruktur eine mittlere Krümmung von null aufweist.

**Claims**

1. Nanostructure for absorbing chemical substances, the nanostructure having maximum external dimensions of 2000 nm and at least a curved external surface, wherein each surface of the nanostructure is an external surface having a Gaussian curvature of less than zero, **characterized in that** it has the shape of a helicoid.

2. Nanostructure according to claim 1, **characterized in that** each surface of the nanostructure has a minimum radius of curvature of more than 1 nm, preferable of more than 10 nm.

3. Nanostructure according to any of the claims 1 an 2, **characterized in that** the nanostructure is made of a single atomic layer.

4. Nanostructure according to any of the claims 1 to 3, **characterized in that** each surface of the nanostructure is a minimal surface.

5. Nanostructure according to claim 4, **characterized in that** each surface of the nanostructure has an average curvature of zero.

**Revendications**

1. Nanostructure pour l'adsorption de substances chimiques présentant une dimension extérieure maximale de 2000 nm et au moins une surface extérieure incurvée, chaque surface de la nanostructure étant une surface extérieure avec une courbure gaussienne inférieure à zéro, **caractérisée en ce qu'**elle présente la forme d'une hélicoïde.

2. Nanostructure selon la revendication 1, **caractérisée en ce que** chaque surface de la nanostructure présente un rayon de courbure minimal supérieur à 1 nm, de préférence supérieur à 10 nm.

3. Nanostructure selon l'une quelconque des revendications 1 et 2, **caractérisée en ce que** la nanostructure est réalisée à partir d'une position individuelle atomique.

4. Nanostructure selon l'une quelconque des revendications 1 à 3, **caractérisée en ce que** chaque surface de la nanostructure est une surface minimale.

5. Nanostructure selon la revendication 4, **caractérisée en ce que** chaque surface de la nanostructure présente une courbure moyenne de zéro.

**Verlauf der potentiellen Energie**
**(Lennard-Jones-Potential)**

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TERRONES, H. et al.** Curved nanostructured Materials. *New J. Phys.,* 2003, vol. 5, 126

- **VON AJAMI, D. et al.** Synthesis of a Möbius aromatic Hydrocarbone. *Nature,* Dezember 2003, vol. 426 (6968), 819-821